# EUROPEAN PATENT SPECIFICATION

(11) **EP 4 228 313 B1**
(45) Date of publication and mention of the grant of the patent: **03.12.2025**
(21) Application number: 20956788.2
(22) Date of filing: 09.10.2020
(51) Int. Cl.: H04W 28/06, H04W 72/04, H04W 72/12, H04L 1/08

(54) **TERMINAL, WIRELESS COMMUNICATION METHOD, AND BASE STATION**
ENDGERÄT, DRAHTLOSKOMMUNIKATIONSVERFAHREN UND BASISSTATION
TERMINAL, PROCÉDÉ DE COMMUNICATION SANS FIL ET STATION DE BASE

(43) Date of publication of application: 16.08.2023
(73) Proprietor: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN); SHAN, Shan, Beijing 100876 (CN); LI, Yong, Beijing 100876 (CN)
(74) Representative: Hoffmann Eitle
(86) International application number: PCT/JP2020/038371
(87) International publication number: WO 2022/074841

(56) References cited:
- WO-A1-2019/093841
- WO-A1-2020/026451
- US-A1- 2020 205 150
- VIVO: "Discussion on enhancement on PDCCH, PUCCH, PUSCH in MTRP scenario", vol. RAN WG1, no. e-Meeting; 20200817 - 20200828, 8 August 2020 (2020-08-08), XP052346738, Retrieved from the Internet <URL:https://ftp.3gpp.org/tsg_ran/WG1_RL1/TSGR1_102-e/Docs/R1-2005364.zip R1-2005364_Discussion on enhancement on PDCCH, PUCCH, PUSCH in MTRP scenario_final.docx> [retrieved on 20200808]
- QUALCOMM INCORPORATED: "Enhancements on Multi-TRP for PDCCH, PUCCH and PUSCH", vol. RAN WG1, no. e-Meeting; 20200817 - 20200828, 8 August 2020 (2020-08-08), XP052348163, Retrieved from the Internet <URL:https://ftp.3gpp.org/tsg_ran/WG1_RL1/TSGR1_102-e/Docs/R1-2006791.zip R1-2006791 Enhancements on Multi-TRP for PDCCH, PUCCH and PUSCH.docx> [retrieved on 20200808]
- MODERATOR (NOKIA, NOKIA SHANGHAI BELL): "Summary of AI:8.1.2.1 Enhancements for Multi-TRP URLLC for PUCCH and PUSCH", 3GPP DRAFT; R1-2007182, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20200817 - 20200828, 25 August 2020 (2020-08-25), Mobile Competence Centre ; 650, route des Lucioles ; F-06921 Sophia-Antipolis Cedex ; France , XP051921452

## Description

### Technical Field

The present disclosure relates to a terminal, a radio communication method, and a base station in next-generation mobile communication systems.

### Background Art

In a universal mobile telecommunications system (UMTS) network, specifications of long term evolution (LTE) have been drafted for the purpose of further increasing data rates, providing low latency, and the like (Non Patent Literature 1). Furthermore, the specifications of LTE-Advanced (3GPP Rel. 10 to 14) have been drafted for the purpose of further increasing capacity and advancement of LTE (third generation partnership project (3GPP) release (Rel.) 8 and 9).

Successor systems to LTE (for example, also referred to as 5th generation mobile communication system (5G), 5G+(plus), 6th generation mobile communication system (6G), New Radio (NR), 3GPP Rel. 15 and subsequent releases, and the like) have also been studied.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

VIVO: "Discussion on enhancement on PDCCH, PUCCH, PUSCH in MTRP scenario", 3GPP DRAFT; R1-2005364 relates to potential enhancements of PDCCH, PUSCH and PUCCH with link level simulations where applicable.

QUALCOMM INCORPORATED: "Enhancements on Multi-TRP for PDCCH, PUCCH and PUSCH", 3GPP DRAFT; R1-2006791

Patent Literature: relates to possible enhancements on multi-TRP for PDCCH, PUCCH and PUSCH.

US 2020/205150 A1 relates to a method for performing PUCCH repetition. The method includes receiving, from a base station, a PDCCH comprising DCI in a CORESET. The method then determines a spatial domain filter for a PUCCH transmission based on an index associated with the CORESET. After determining the spatial domain filter, the method may transmit, to the base station, a PUCCH in a slot using the spatial domain filter, and transmit, to the base station, a repeat of the PUCCH in one of the same slot, or a different slot, using the spatial domain filter.

### Summary of Invention

### Technical Problem

In Rel. 15/16 NR, a user terminal (user equipment (UE)) can use inter-slot physical uplink control channel (PUCCH) repetition transmission. Further, in Rel. 17 and subsequent releases, PUCCH repetition transmission in a slot is considered.

However, a specific control method for identification of inter-slot repetition and intra-slot repetition by the UE and execution of the PUCCH repetition transmission has not been studied. If the control method is not clarified, appropriate PUCCH repetition cannot be performed, and an increase in communication throughput, improvement in reception quality, and the like may be suppressed.

Therefore, an object of the present disclosure is to provide a terminal, a radio communication method, and a base station capable of implementing suitable PUCCH repetition transmission.

### Solution to Problem

A terminal according to an aspect of the present disclosure is provided according to appended independent claim 1.

### Advantageous Effects of Invention

According to one aspect of the present disclosure, suitable PUCCH repetition transmission can be implemented.

### Brief Description of Drawings

[FIG. 1] Figs. 1A and 1B are diagrams illustrating examples of intra-slot physical uplink control channel (PUCCH) repetition transmission.
[FIG. 2] Figs. 2A to 2C are diagrams illustrating an example of radio resource control (RRC) parameters for inter-slot repetition and intra-slot repetition in a first embodiment.
[FIG. 3] Fig. 3 is a diagram illustrating an example of RRC parameters for inter-slot repetition and intra-slot repetition in a second embodiment.
[FIG. 4] Fig. 4 is a diagram illustrating an example of PUCCH repetition transmission according to a modification of the second/third embodiments.
[FIG. 5] Fig. 5 is a diagram illustrating an example of a schematic configuration of a radio communication system according to one embodiment.
[FIG. 6] Fig. 6 is a diagram illustrating an example of a configuration of a base station according to one embodiment.
[FIG. 7] Fig. 7 is a diagram illustrating an example of a configuration of a user terminal according to one embodiment.
[FIG. 8] Fig. 8 is a diagram illustrating an example of a hardware configuration of the base station and the user terminal according to one embodiment.

### Description of Embodiments

### (Spatial Relation Information)

In the NR, the UE controls transmission processing (for example, at least one of transmission, mapping, precoding, modulation, or coding) of at least one of an uplink signal or a channel (also referred to as a signal/channel) on the basis of a predetermined spatial relation.

A spatial relation applied to a predetermined signal/channel may be specified by spatial relation information (SRI) reported (configured) using higher layer signaling.

Note that in the present disclosure, the higher layer signaling may be, for example, any one of radio resource control (RRC) signaling, medium access control (MAC) signaling, broadcast information, or a combination thereof.

For example, a MAC control element (MAC CE), a MAC protocol data unit (PDU), or the like may be used for the MAC signaling. The broadcast information may be, for example, a master information block (MIB), a system information block (SIB), remaining minimum system information (RMSI), other system information (OSI), or the like.

For example, in Rel. 15 NR, spatial relation information ("PUCCH-SpatialRelationInfo" information element of RRC) between a predetermined reference signal (RS) and an uplink control channel (physical uplink control channel (PUCCH)) may be included in PUCCH configuration information ("PUCCH-Config" information element of RRC) and configured in the UE.

The predetermined reference signal may be, for example, at least one of a synchronization signal block (SSB), a channel state information reference signal (CSI-RS), or a sounding reference signal (SRS).

The configured SRI may include an SRI identifier (ID) for identifying the SRI. The configured SRI may include at least one of an SSB index, a CSI-RS resource ID, or an SRS resource ID, as an index of the predetermined RS. Further, the SRI may include a serving cell index, a bandwidth part (BWP) ID, and the like corresponding to the predetermined RS.

In a case where the spatial relation information related to the SSB or the CSI-RS and the PUCCH is configured, the UE may transmit the PUCCH by using a spatial domain filter that is the same as a spatial domain filter for receiving the SSB or CSI-RS. That is, in this case, the UE may assume that a UE reception beam of the SSB or CSI-RS and a UE Tx beam of the PUCCH are the same.

In a case where the spatial relation information related to the SRS and the PUCCH is configured, the UE may transmit the PUCCH by using a spatial domain filter that is the same as a spatial domain filter for transmitting the SRS. That is, in this case, the UE may assume that the UE transmission beam of the SRS and the UE Tx beam of the PUCCH are the same.

Note that a spatial domain filter for transmission of a base station, a downlink spatial domain transmission filter, and a Tx beam of the base station may be replaced with each other. A spatial domain filter for reception of the base station, an uplink spatial domain receive filter, and a reception beam of the base station may be replaced with each other.

Further, a spatial domain filter for transmission of the UE, an uplink spatial domain transmission filter, and a Tx beam of the UE may be replaced with each other. A spatial domain filter for reception of the UE, a downlink spatial domain receive filter, and a reception beam of the UE may be replaced with each other.

The UE may configure the SRI in units of PUCCH configurations (PUCCH-Config). The SRI configured by the PUCCH configuration may be applied to all PUCCH resources configured by the PUCCH configuration.

In a case where more than one piece of SRI regarding the PUCCH is configured, the UE may perform control in such a way that one piece of PUCCH SRI is active with respect to one PUCCH resource at a certain time, on the basis of a PUCCH spatial relation activation/deactivation MAC CE.

### (Multi-TRPs)

In the NR, studies are underway to allow the UE to perform UL transmission (for example, PUCCH transmission) to one or more transmission/reception points (TRPs) (multi-TRPs (MTRPs)).

As an example, it has been studied to repeatedly transmit a PUCCH to which different SRI is applied to multi-TRPs in order to improve reliability of the PUCCH for use cases (or services) with ultra-high reliability and low latency (for example, ultra reliable and low latency communications (URLLC)). The PUCCH repetition transmission may be referred to as PUCCH repetition.

Note that the SRI may correspond to a beam. For example, the UE may assume that a PUCCH with different SRI is transmitted using a different beam.

With the PUCCH repetition transmission, the reception quality of the network side can be expected to be improved for the PUCCH.

In the current Rel. 15/16 NR, inter-slot PUCCH repetition transmission can be used. Further, in Rel. 17 and subsequent releases, PUCCH repetition transmission in a slot is considered.

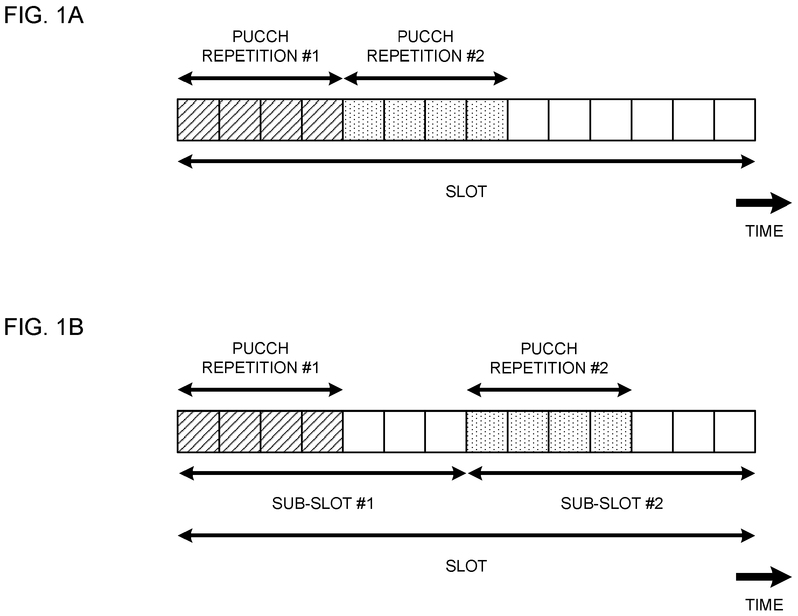

Figs. 1A and 1B are diagrams illustrating examples of the intra-slot PUCCH repetition transmission. Fig. 1A illustrates an example of performing intra-slot PUCCH repetition in consecutive symbols, similar to an existing physical uplink shared channel (PUSCH) repetition type B. In this example, total two times of intra-slot repetition transmissions of PUCCH repetition #1 (first to fourth symbols in a slot) and PUCCH repetition #2 (fifth to eighth symbols in the slot) are performed. The repetition transmissions in Fig. 1A correspond to (continuous) repetition transmissions with no gap therebetween.

Fig. 1B illustrates an example in which the intra-slot PUCCH repetition transmission is performed in symbols at the same positions for each period of a certain unit in a slot. For example, the period of the certain unit may be a sub-slot (for example, seven symbols). In this example, the slot is divided into two sub-slots #1 and #2, and total two times of intra-slot repetition transmissions of PUCCH repetition #1 (first to fourth symbols in the sub-slot #1) and PUCCH repetition #2 (first to fourth symbols in the sub-slot #2) are performed. The repetition transmissions in Fig. 1B correspond to (discontinuous) repetition transmissions with a gap therebetween.

However, a specific control method for identification of inter-slot repetition and intra-slot repetition by the UE and execution of the PUCCH repetition transmission has not been studied. If the control method is not clarified, appropriate PUCCH repetition cannot be performed, and an increase in communication throughput, improvement in reception quality, and the like may be suppressed.

Therefore, the present inventors have conceived a method for implementing suitable PUCCH repetition transmission. In an aspect of the present disclosure, the UE can suitably determine how to switch between the inter-slot repetition and the intra-slot repetition.

Hereinafter, embodiments according to the present disclosure will be described in detail with reference to the drawings. Radio communication methods according to respective embodiments may be applied individually or in combination.

Note that, in the present disclosure, "A/B" may indicate "at least one of A or B".

In the present disclosure, "activate", "deactivate", "indicate", "select", "configure", "update", "determine", and the like may be replaced with each other.

In the present disclosure, RRC, an RRC parameter, an RRC message, a higher layer parameter, an information element (IE), and a configuration may be replaced with each other. In the present disclosure, an MAC CE, an update command, and an activation/deactivation command may be replaced with each other. In the present disclosure, "support", "control", "controllable", "operate", and "operable" may be replaced with each other.

In the present disclosure, a panel, a beam, a panel group, a beam group, an uplink (UL) transmission entity, a TRP, spatial relation information (SRI), a spatial relation, a control resource set (CORESET), a physical downlink shared channel (PDSCH), a codeword, a base station, a predetermined antenna port (for example, a demodulation reference signal (DMRS) port), a predetermined antenna port group (for example, a DMRS port group), a predetermined group (for example, a code division multiplexing (CDM) group, a predetermined reference signal group, and a CORESET group), a predetermined resource (for example, a predetermined reference signal resource), a predetermined resource set (for example, a predetermined reference signal resource set), a CORESET pool, a PUCCH group (PUCCH resource group), a spatial relation group, a downlink transmission configuration indication state (TCI state) (DL TCI state), an uplink TCI state (UL TCI state), a unified TCI state, a common TCI state, a QCL, and the like may be replaced with each other.

Further, a TCI state identifier (ID) and a TCI state may be replaced with each other. A TCI state and TCI may be replaced with each other.

In the present disclosure, an index, an ID, an indicator, and a resource ID may be replaced with each other. In the present disclosure, a sequence, a list, a set, a group, a cohort, a cluster, a subset, and the like may be replaced with each other.

In the present disclosure, the term "spatial relation" may be replaced with a PUCCH spatial relation.

In the present disclosure, multi-TRPs (MTRPs), a multi-TRP system, multi-TRP transmission, and multi-PDSCHs may be replaced with each other.

The intra-slot repetition in the present disclosure may be the intra-slot repetition as illustrated in Figs. 1A and 1B, or may be other intra-slot/inter-sub-slot/inter-symbol repetitions.

### (Radio Communication Method)

### <First Embodiment>

A first embodiment relates to identification of the inter-slot repetition and the intra-slot repetition.

In the first embodiment, the number of repetitions is determined by a common parameter for both the inter-slot repetition and the intra-slot repetition. The common parameter may be defined in advance by a specification, may be reported to the UE by higher layer signaling (for example, RRC signaling, MAC CE), physical layer signaling (for example, DCI), or a combination thereof, or may be determined on the basis of the UE capability.

Note that the DCI in each embodiment of the present disclosure may be, for example, a DCI format (for example, DCI format 1_0/1_1/1_2) for scheduling a PDSCH.

The common parameter may be an RRC parameter "nrofslots" indicating the number of slot repetitions in Rel. 15/16, or may be a new RRC parameter (for example, an RRC parameter "nrofRepetitions") indicating the number of inter-slot repetitions and the number of intra-slot repetitions.

The common parameter may be configured for each PUCCH format (in units of PUCCH formats), for each PUCCH resource set, or for each PUCCH resource. Hereinafter, the PUCCH format in the present disclosure may be read as a PUCCH resource set, a PUCCH resource, or the like.

In a case where a plurality of candidate values of the common parameter are defined or configured, the UE may determine (select) one value to be applied to PUCCH transmission from the candidate values on the basis of at least one of an MAC CE or DCI. In addition, even in a case where the candidate values of the common parameter are not configured, the UE may determine the value of the common parameter on the basis of at least one of the MAC CE or the DCI.

For example, the UE may explicitly/implicitly specify the number of inter-slot/intra-slot repetitions to be applied to PUCCH transmission by a specific field of the DCI (for example, at least one field such as a repetition number field, a field related to a PUCCH resource (a PUCCH resource indicator (PRI)) field or the like), a field related to the time domain (for example, a PDSCH-to-HARQ_feedback timing indicator field), or a field related to power control (for example, a transmit power control (TPC) command field)).

In a case where the common parameter (for example, nrofslots) is not configured/reported, the UE may determine not to apply repetition transmission to the PUCCH (no repetition or one repetition).

The UE may determine whether the PUCCH repetition is the inter-slot repetition or the intra-slot repetition on the basis of at least one of the followings:
(1) a PUCCH format used for PUCCH repetition;
(2) information regarding PUCCH repetition (for example, information regarding a PUCCH repetition scheme); and
(3) the value of the common parameter.

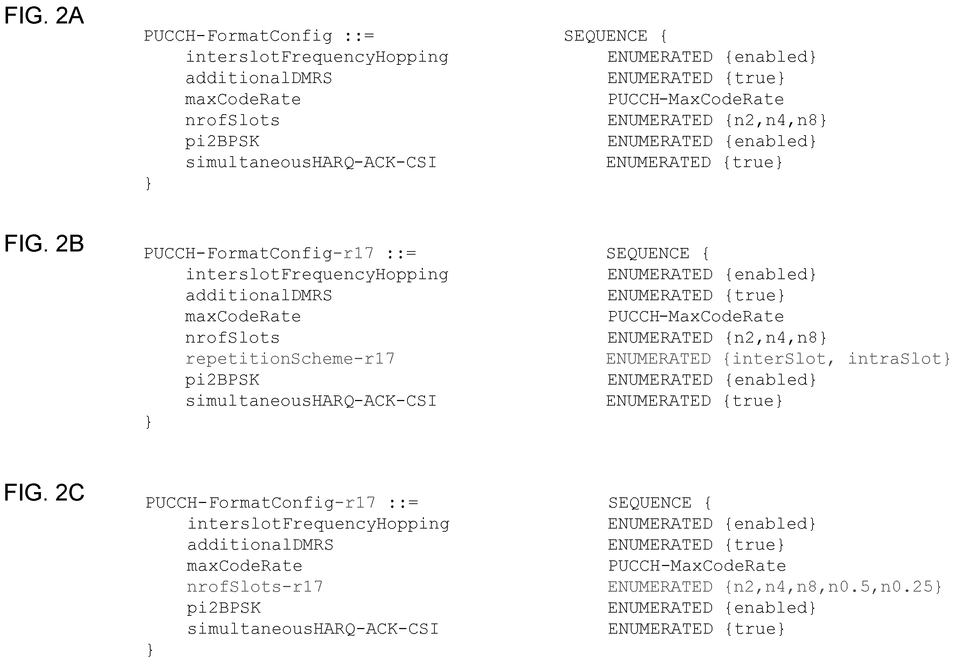

Figs. 2A to 2C are diagrams illustrating an example of radio resource control (RRC) parameters for the inter-slot repetition and the intra-slot repetition in the first embodiment. This example is described using Abstract Syntax Notation One (ASN.1) (since this is merely an example, there is a possibility that this is not a complete description). In this example, an example in which the number of inter-slot intra-slot repetitions and intra-slot repetitions is configured for each PUCCH format will be described.

Fig. 2A is a diagram illustrating an example of the above (1). PUCCH-FormatConfig, which is an RRC information element (IE) that includes a configuration related to the illustrated PUCCH format, is the same as PUCCH-FormatConfig defined in Rel. 15/16 NR, except that nrofSlots may indicate not only the number of inter-slot repetitions but also the number of intra-slot repetitions. In Fig. 2A, the common parameter corresponds to nrofSlots.

In this example, possible values of nrofSlots are n2, n4, and n8, and nX indicates that the number of repetitions is X, but the value of X is not limited thereto, and for example, n1 (the number of repetitions is one, that is, no repetition) can be used.

For example, on the basis of the above (1), the UE may determine whether PUCCH repetition is the inter-slot repetition or the intra-slot repetition as follows.
- The inter-slot repetition in a case where a value of the common parameter (nrofSlots) is larger than 1, and the PUCCH format is a specific format
- The intra-slot repetition in a case where the value of the common parameter (nrofSlots) is larger than 1 and the PUCCH format is not the specific format (in other words, the format is different from the specific format)

The specific format here may be, for example, a format for a long PUCCH (PUCCH format 1/3/4) or a format for a short PUCCH (PUCCH format 0/2). For example, the UE may perform the inter-slot repetition in a case where the value of the common parameter is larger than 1 and the PUCCH format is the PUCCH format 1/3/4, and may perform the intra-slot repetition in a case where the PUCCH format is the PUCCH format 0/2.

Note that the format for a long PUCCH (long PUCCH format) in the present disclosure is not limited to the PUCCH format 1/3/4, and may be replaced with, for example, an arbitrary PUCCH format having a length of a certain period (a certain number of symbols, for example, three or four symbols) or more. Further, the format for a short PUCCH (short PUCCH format) in the present disclosure is not limited to the PUCCH format 0/2, and may be, for example, an arbitrary PUCCH format having a length of less than a certain period (a certain number of symbols, for example, three or four symbols).

Which one of the inter-slot repetition and the intra-slot repetition is to be applied to a certain PUCCH format may be determined in advance by a specification.

Note that the PUCCH format used for the PUCCH repetition may be associated with a PUCCH resource. The PUCCH resource may be configured for the UE by, for example, higher layer signaling in association with UCI to be transmitted, or may be specified for the UE by the PUCCH resource indicator (PRI) field of the DCI.

In Rel. 15/16 NR, the PUCCH-FormatConfig IE is not associated with the PUCCH format 0 (that is, nrofSlots is not applied), and nrofSlots is not applied to the PUCCH format 2. However, in the first embodiment, the PUCCH-FormatConfig IE or nrofSlots may be applied to the PUCCH format 0/2.

Fig. 2B is a diagram illustrating an example of the above (2). PUCCH-FormatConfig-r17, which is an RRC IE that includes a configuration related to the illustrated PUCCH format, is the same as PUCCH-FormatConfig specified in Rel. 15/16 NR, except that nrofSlots may indicate not only the number of inter-slot repetitions but also the number of intra-slot repetitions. In Fig. 2B, the common parameter corresponds to nrofSlots.

Note that "-r17" in the present disclosure indicates a parameter to be defined in 3GPP Rel. 17, but the name of the parameter is not limited thereto (for example, "-r17" may be omitted), and the release of 3GPP to which the present disclosure is applied is not limited to Rel. 17. In the present disclosure, a parameter to which "-r17" is added may be referred to as a name without "-r17".

Further, PUCCH-FormatConfig-r17 also includes information (repetitionscheme-r17) regarding a PUCCH repetition scheme, and can take a value (interSlot) indicating the inter-slot repetition or a value (intraSlot) indicating the intra-slot repetition.

For example, on the basis of the above (2), the UE may determine whether PUCCH repetition is the inter-slot repetition or the intra-slot repetition as follows.
- The inter-slot repetition in a case where the value of the common parameter (nrofSlots) is larger than 1, and the information regarding the PUCCH repetition scheme is a value indicating the inter-slot repetition
- The intra-slot repetition in a case where the value of the common parameter (nrofSlots) is larger than 1 and the information regarding the PUCCH repetition scheme is a value indicating the intra-slot repetition

Note that the information regarding the PUCCH repetition scheme may be configured for each PUCCH format, for each PUCCH resource set, or for each PUCCH resource. Furthermore, the information regarding the PUCCH repetition scheme may be indicated by the MAC CE or the DCI.

Fig. 2C is a diagram illustrating an example of the above (3). PUCCH-FormatConfig-r17, which is an RRC IE that includes a configuration related to the illustrated PUCCH format, is the same as PUCCH-FormatConfig specified in Rel. 15/16 NR, except that, instead of nrofSlots, nrofSlots-r17 indicating the number of inter-slot repetitions and the number of intra-slot repetitions is included. In Fig. 2C, the common parameter corresponds to nrofSlots-r17.

A value that can be taken by nrofSlot-r17 may belong to at least one of a first set (also referred to as S1) corresponding to the inter-slot repetition or a second set (also referred to as S2) corresponding to the intra-slot repetition. For example, in Fig. 2C, S1 = {n2,n4,n8} and S2 = {n0.5,n0.25}.

For example, on the basis of the above (3), the UE may determine whether PUCCH repetition is the inter-slot repetition or the intra-slot repetition as follows.
- The inter-slot repetition in a case where the value of the common parameter (nrofSlots-r17) belongs to S1
- The intra-slot repetition in a case where the value of the common parameter (nrofSlots-r17) belongs to S2

The UE performing PUCCH repetition transmission by using nrofSlots-r17 = nX may repeatedly transmit the PUCCH over X slots (or in X slot units). For example, in a case where nX is less than 1, it may mean that the PUCCH is repeatedly transmitted 1/X times within one slot.

Note that the UE may determine whether the PUCCH repetition is the inter-slot repetition or the intra-slot repetition on the basis of a combination of at least two of the above (1), (2), and (3).

For example, the UE may assume that some PUCCH formats (for example, PUCCH format 1/3/4) are only used for the inter-slot repetition. In this case, nrofslots of PUCCH-FormatConfig for the PUCCH format 1/3/4 indicates the number of inter-slot repetitions. On the other hand, for some other PUCCH formats (for example, PUCCH format 0/2), the UE may determine whether the PUCCH repetition is the inter-slot repetition or the intra-slot repetition on the basis of the above (2) or (3).

According to the first embodiment described above, the UE can appropriately determine which one of the inter-slot repetition and the intra-slot repetition is to be used on the basis of the parameter (for example, the PUCCH format, the PUCCH resource, the information regarding the PUCCH repetition scheme, the parameter indicating the number of repetitions commonly used for the inter-slot repetition and the intra-slot repetition, and the like) related to the PUCCH.

### <Second Embodiment>

A second embodiment relates to identification of the inter-slot repetition and the intra-slot repetition.

In the second embodiment, the number of repetitions of the inter-slot repetition and the intra-slot repetition is determined by different parameters.

For example, the parameter for the number of inter-slot repetitions may be an RRC parameter "nrofslots" indicating the number of slot repetitions in Rel. 15/16. On the other hand, the parameter for the number of intra-slot repetitions may be a new RRC parameter (for example, "nrofIntraSlot-r17").

These different parameters (nrofslots and nrofIntraSlot-r17) may be configured for each PUCCH format, for each PUCCH resource set, or for each PUCCH resource.

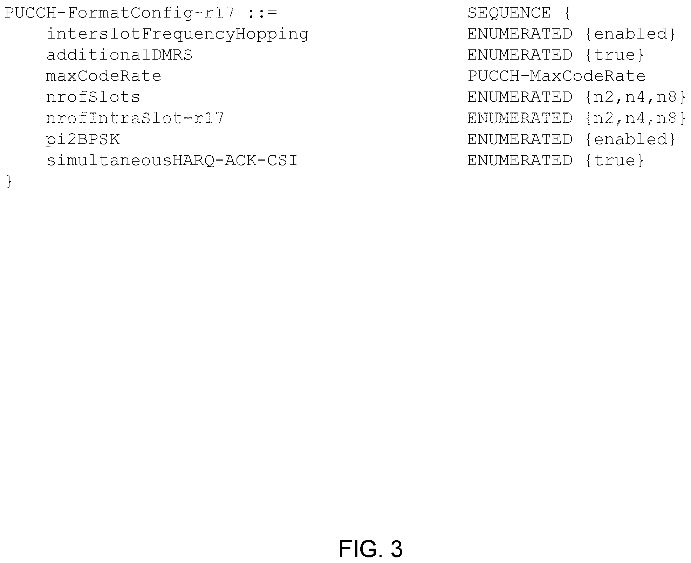

Fig. 3 is a diagram illustrating an example of the RRC parameters for the inter-slot repetition and the intra-slot repetition in the second embodiment. PUCCH-FormatConfig-r17, which is an RRC IE that includes a configuration related to the illustrated PUCCH format, is the same as PUCCH-FormatConfig specified in Rel. 15/16 NR, except that a parameter nrofIntraSlot-r17 for the number of intra-slot repetitions is included.

For example, the UE may determine whether or not to apply the repetition and whether to apply the inter-slot repetition or the intra-slot repetition for a certain PUCCH format as follows.
- No repetition in a case where both nrofslots and nrofIntraSlot-r17 are not configured
- The inter-slot repetition in a case where the value of nrofSlots is larger than 1
- The intra-slot repetition in a case where the value of nrofIntraSlot-r17 is larger than 1

Note that the UE does not have to expect that both nrofslots and nrofIntraSlot-r17 are configured to be larger than 1.

In addition, the UE may allow both nrofslots and nrofIntraSlot-r17 to be configured to be larger than 1. In this case, the UE may determine whether to apply the inter-slot repetition or the intra-slot repetition on the basis of the information regarding the PUCCH repetition scheme as described in the first embodiment.

Instead of nrofslots, the UE may configure a parameter (for example, "nrofInterSlot-r17") for the number of inter-slot repetitions, and may determine the number of inter-slot repetitions on the basis of nrofInterSlot-r17. nrofInterSlot-r17 may be configured for each PUCCH format, for each PUCCH resource set, or for each PUCCH resource.

According to the second embodiment described above, the UE can appropriately determine whether to use the inter-slot repetition or the intra-slot repetition on the basis of the parameter for the number of inter-slot repetitions/the parameter for the number of intra-slot repetitions.

### <Third Embodiment>

A third embodiment relates to identification of the inter-slot repetition and the intra-slot repetition.

In the third embodiment, the number of repetitions of the inter-slot repetition and the intra-slot repetition is determined by different parameters.

For example, the parameter for the number of inter-slot repetitions may be an RRC parameter "nrofslots" indicating the number of slot repetitions in Rel. 15/16. On the other hand, the parameter for the number of intra-slot repetitions may be determined by the DCI. For example, the parameter for the number of intra-slot repetitions may be indicated by a specific field (for example, at least one field such as a repetition number field, a PRI field, a PDSCH-to-HARQ_feedback timing indicator field, a TPC command field, or the like) of the DCI.

In the third embodiment, for the UE, the intra-slot repetition may be enabled by higher layer signaling. A parameter indicating the enabling of the intra-slot repetition may be configured for each PUCCH format, for each PUCCH resource set, or for each PUCCH resource.

Note that a value that can be taken by a higher layer (for example, RRC) parameter indicating the enabling of the intra-slot repetition is only "enabled", and in a case where the parameter is not configured, it is assumed to be "disabled", but the present invention is not limited thereto. For example, a value that can be taken by the parameter may be "enabled" or "disabled", or the value that can be taken may be only "disabled" and in a case where the parameter is not configured, it may be assumed to be "enabled".

The UE for which the enabling of the intra-slot repetition is configured may expect that the DCI includes the specific field for the number of intra-slot repetitions. Note that the UE for which the enabling of the intra-slot repetition does not have to be configured, may expect that the DCI includes the specific field for the number of intra-slot repetitions.

For example, the UE may determine whether or not to apply the repetition and whether to apply the inter-slot repetition or the intra-slot repetition for a certain PUCCH format as follows.
- No repetition in a case where nrofslots is not configured and the enabling of the intra-slot repetition is not configured
- The inter-slot repetition in a case where the value of nrofSlots is larger than 1
- The intra-slot repetition in a case where the enabling of the intra-slot repetition is configured.

Note that even in a case where the enabling of the intra-slot repetition is configured, the UE may determine that there is no PUCCH repetition when the number of intra-slot repetitions = 1 is indicated by the DCI.

Note that the UE does not have to expect that both nrofslots that is larger than 1 and the enabling of the intra-slot repetition are configured.

Instead of nrofslots, the UE may configure a parameter (for example, "nrofInterSlot-r17") for the number of inter-slot repetitions, and may determine the number of inter-slot repetitions on the basis of nrofInterSlot-r17. nrofInterSlot-r17 may be configured for each PUCCH format, for each PUCCH resource set, or for each PUCCH resource.

In addition, the UE may determine the number of intra-slot repetitions by the DCI instead of nrofslots. For example, a DCI field for the number of inter-slot repetitions may be defined as a field (for example, an inter-slot repetition number field) different from a DCI field for the number of intra-slot repetitions, or may be at least one of the specific fields described above.

According to the third embodiment described above, the UE can appropriately determine whether to use the inter-slot repetition or the intra-slot repetition on the basis of the parameter for the number of inter-slot repetitions/the parameter for the number of intra-slot repetitions indicated by the DCI.

### <Modifications of Second/Third Embodiments>

In a case where the intra-slot repetition is applied, the number of intra-slot repetitions may be configured/indicated by (the number of slots) * (the number of intra-slot repetitions). In this case, both the inter-slot repetition and the intra-slot repetition are applied to PUCCH transmission.

Here, the number of slots (= the number of inter-slot repetitions) may be given by, for example, a field for the number of inter-slot repetitions of nrofslots, nrofInterSlot-r17, or the DCI described above. In addition, the number of intra-slot repetitions may be given by, for example, the field for the number of intra-slot repetitions of nrofIntraSlot-r17 or the DCI described above.

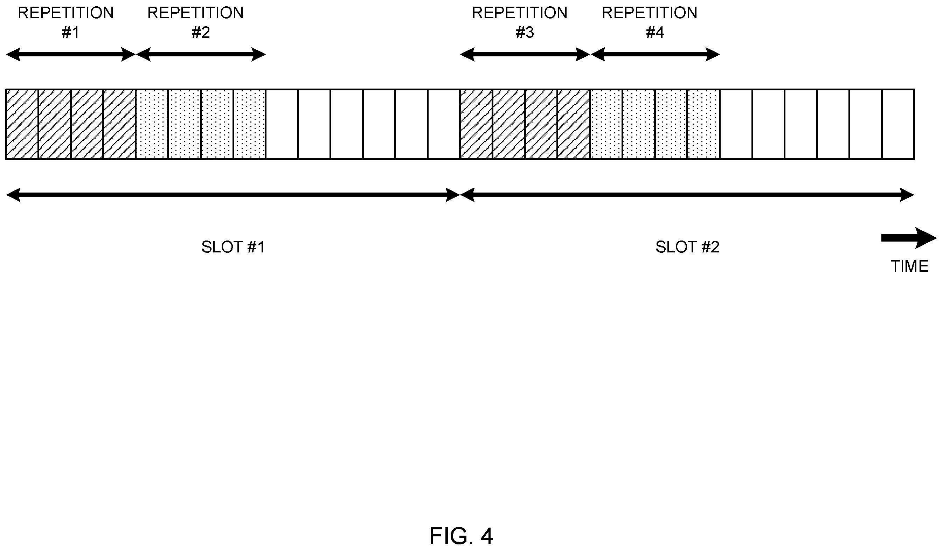

Fig. 4 is a diagram illustrating an example of PUCCH repetition transmission according to the modification of the second/third embodiments. This example shows a case where the number of slots = 2 and the number of intra-slot repetitions = 2. In this example, the UE performs PUCCH repetition transmission four times in total over two slots (slots #1 and #2). In each slot, the intra-slot repetition transmission (repetitions #1 and #2 or repetitions #3 and #4) are performed two times.

As for PUCCH repetition for MTRPs, it is conceivable that a plurality of spatial relations (spatial relation information) is configured/activated/indicated for a PUCCH resource used for transmission, or a plurality of PUCCH resources are configured/activated/indicated. In these cases, in a case where the intra-slot repetition is enabled by RRC/MAC CE/DCI, the UE may assume that the number of intra-slot repetitions corresponds to the number of spatial relations or the number of PUCCH resources.

In other words, the UE for which the intra-slot repetition is enabled for the PUCCH for MTRPs may determine the number of intra-slot repetitions on the basis of the number of spatial relations or the number of PUCCH resources separately configured/activated/indicated without explicitly configuring/notifying the number of intra-slot repetitions.

The PUCCH repetition for MTRPs may mean PUCCH repetition for which a plurality of spatial relations (or a plurality of PUCCH resources) are configured/activated/indicated. PUCCH repetition for a single TRP (STRP) may mean PUCCH repetition for which one spatial relation (or one PUCCH resource) is configured/activated/indicated.

The UE may control PUCCH transmission on the assumption that the intra-slot repetition is applied only to the PUCCH for MTRPs and not to the PUCCH for a STRP. The UE may assume that a long PUCCH format (for example, PUCCH format 1/3/4) is used for the PUCCH for the STRP. The UE may assume that a short PUCCH format (for example, PUCCH format 0/2) is used for the PUCCH for the MTRPs.

The UE for which the intra-slot repetition is enabled by the RRC/MAC CE/DCI may apply the assumption that the number of intra-slot repetitions described above corresponds to the number of spatial relations or the number of PUCCH resources only for the short PUCCH format.

Regarding these assumptions, the intra-slot repetition may be replaced with the inter-slot repetition.

### <Others>

Note that at least one of the above-described embodiments may be applied to all PUCCH formats, or may be applied only to some PUCCH formats.

In addition, at least one of the above-described embodiments may be applied to at least one of PUCCH repetition transmission for a STRP and PUCCH repetition transmission for MTRPs.

At least one of the above-described embodiments may be applied only to a UE that has reported a specific UE capability or supports the specific UE capability.

The specific UE capability may indicate whether or not the intra-slot PUCCH repetition is supported.

Furthermore, at least one of the above-described embodiments may be applied in a case where the UE configures specific information related to the above-described embodiments by higher layer signaling. For example, the specific information may be information indicating that the inter-slot PUCCH repetition is enabled, information indicating that the intra-slot PUCCH repetition is enabled, information indicating that different spatial relations for a PUCCH transmission occasion are enabled, any RRC parameter for a specific release (for example, Rel. 17), or the like.

Further, a plurality of spatial relations (SRI) in the present disclosure may be replaced with an SRI sequence, an SRI set, an SRI pattern, an SRI applied to PUCCH repetition, and the like. The plurality of SRIs may be configured/activated/indicated for the UE by using an SRI sequence including one or more SRIs.

### (Radio Communication System)

Hereinafter, a configuration of a radio communication system according to one embodiment of the present disclosure will be described. In this radio communication system, communication is performed using one or a combination of the radio communication methods according to the embodiments of the present disclosure.

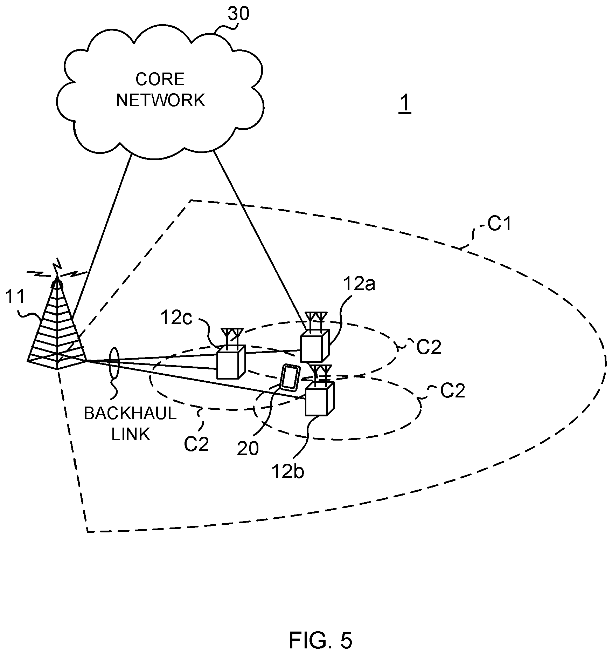

Fig. 5 is a diagram illustrating an example of a schematic configuration of the radio communication system according to one embodiment. A radio communication system 1 may implement communication by using long term evolution (LTE) specified in the third generation partnership project (3GPP), 5th generation mobile communication system new radio (5G NR), and the like.

Furthermore, the radio communication system 1 may support dual connectivity between a plurality of radio access technologies (RATs) (multi-RAT dual connectivity (MR-DC)). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are arranged in the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base stations 10", unless these are distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency range (frequency range 1 (FR1)) or a second frequency range (frequency range 2 (FR2)). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency ranges, definitions, and the like of the FR1 and FR2 are not limited thereto, and, for example, FR1 may correspond to a frequency range higher than FR2.

Further, the user terminal 20 may perform communication on each CC using at least one of time division duplex (TDD) or frequency division duplex (FDD).

The plurality of base stations 10 may be connected to each other in a wired manner (for example, an optical fiber, an X2 interface, or the like in compliance with common public radio interface (CPRI)) or in a wireless manner (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), or the like.

The user terminal 20 may be a terminal corresponding to at least one of communication methods such as LTE, LTE-A, and 5G.

In the radio communication system 1, a radio access method based on orthogonal frequency division multiplexing (OFDM) may be used. For example, in at least one of downlink (DL) or uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that, in the radio communication system 1, another radio access method (for example, another single carrier transmission method or another multi-carrier transmission method) may be used as the UL and DL radio access methods.

In the radio communication system 1, a downlink shared channel (physical downlink shared channel (PDSCH)) shared by the user terminals 20, a broadcast channel (physical broadcast channel (PBCH)), a downlink control channel (physical downlink control channel (PDCCH)), and the like may be used as downlink channels.

In the radio communication system 1, an uplink shared channel (physical uplink shared channel (PUSCH)) shared by the user terminals 20, an uplink control channel (physical uplink control channel (PUCCH)), a random access channel (physical random access channel (PRACH)), and the like may be used as uplink channels.

User data, higher layer control information, a system information block (SIB), and the like are transmitted on the PDSCH. The PUSCH may transmit the user data, higher layer control information, and the like. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH or the PUSCH.

Note that, the DCI for scheduling the PDSCH may be referred to as DL assignment, DL DCI, or the like, and the DCI for scheduling the PUSCH may be referred to as UL grant, UL DCI, or the like. Note that, the PDSCH may be replaced with DL data, and the PUSCH may be replaced with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. The UE may monitor the CORESET associated with a certain search space on the basis of search space configuration.

One search space may correspond to a PDCCH candidate corresponding to one or more aggregation levels. One or more search spaces may be referred to as a search space set. Note that the terms "search space", "search space set", "search space configuration", "search space set configuration", "CORESET", "CORESET configuration", and the like in the present disclosure may be replaced with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), or scheduling request (SR) may be transmitted on the PUCCH. A random access preamble for establishing connection with a cell may be transmitted on the PRACH.

Note that, in the present disclosure, downlink, uplink, and the like may be expressed without "link". Furthermore, various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) or a secondary synchronization signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that, the DMRS may also be referred to as a user terminal-specific reference signal (UE-specific reference signal).

### (Base Station)

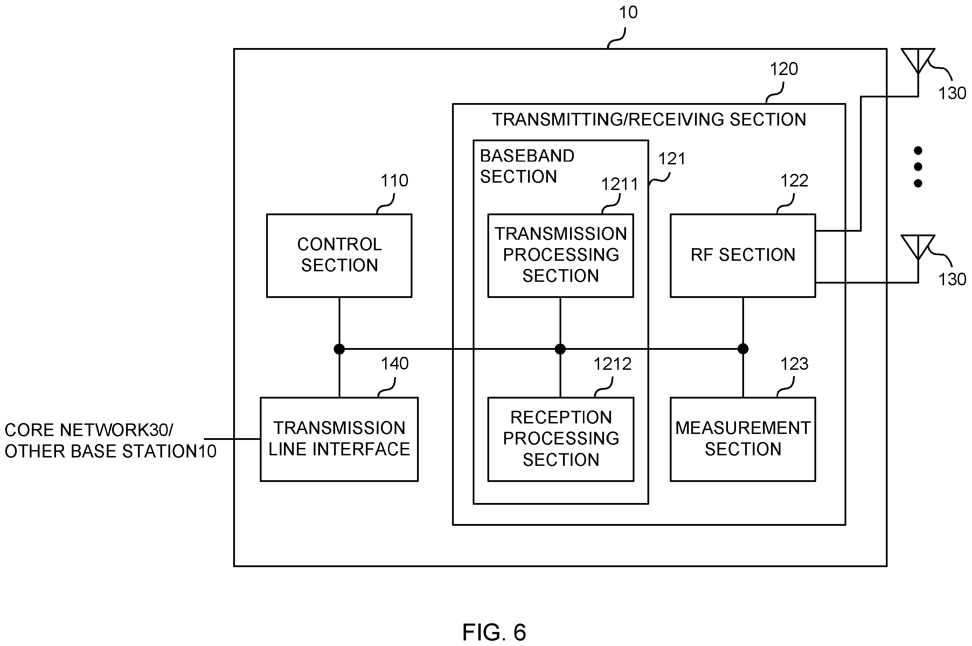

Fig. 6 is a diagram illustrating an example of a configuration of the base station according to one embodiment. The base station 10 includes a control section 110, a transmission/reception section 120, a transmission/reception antenna 130, and a transmission line interface 140. Note that one or more control sections 110, one or more transmitting/receiving sections 120, one or more transmission/reception antennas 130, and one or more transmission line interfaces 140 may be provided.

Note that, although this example mainly describes functional blocks of a characteristic part of the present embodiment, it may be assumed that the base station 10 includes other functional blocks that are necessary for radio communication as well. A part of processing performed by each section described below may be omitted.

The control section 110 controls the entire base station 10. The control section 110 can include a controller, a control circuit, and the like, which are described on the basis of common recognition in the technical field related to the present disclosure.

The control section 110 may control signal generation, scheduling (for example, resource allocation or mapping), and the like. The control section 110 may control transmission/reception, measurement, and the like using the transmitting/receiving section 120, the transmitting/receiving antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or releasing) of a communication channel, state management of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, a transmission/reception circuit, and the like that are described on the basis of common recognition in the technical field related to the present disclosure.

The transmitting/receiving section 120 may be configured as an integrated transmitting/receiving section, or may include a transmitting section and a receiving section. The transmitting section may include the transmission processing section 1211 and the RF section 122. The receiving section may include the reception processing section 1212, the RF section 122, and the measurement section 123.

The transmission/reception antenna 130 can include an antenna, which is described on the basis of common recognition in the technical field related to the present disclosure, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a Tx beam or a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency range, filtering processing, amplification, and the like on the baseband signal, and may transmit a signal in the radio frequency range via the transmission/reception antenna 130.

Meanwhile, the transmitting/receiving section 120 (RF section 122) may perform amplification, filtering processing, demodulation to a baseband signal, and the like on the signal in the radio frequency range received by the transmission/reception antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform radio resource management (RRM), channel state information (CSI) measurement, and the like, on the basis of the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may perform transmission/reception of a signal (backhaul signaling) to/from an apparatus included in the core network 30, another base station 10, or the like, and may perform acquisition, transmission, or the like of user data (user plane data), control plane data, and the like for the user terminal 20.

Note that, the transmitting section and the receiving section of the base station 10 in the present disclosure may include at least one of the transmitting/receiving section 120, the transmission/reception antenna 130, or the transmission line interface 140.

Note that the transmitting/receiving section 120 may transmit a parameter related to a physical uplink control channel (PUCCH) (for example, a configuration (information) of a PUCCH format, a configuration (information) of a PUCCH resource, information regarding a PUCCH repetition scheme, a parameter indicating the number of repetitions commonly used for inter-slot repetition and intra-slot repetition, a field related to the number of repetitions of nrofInterSlot-r17, nrofIntraSlot-r17, and DCI, and the like) for causing a terminal to determine whether to apply the inter-slot repetition or the intra-slot repetition to PUCCH repetition transmission.

The control section 110 may assume that the user terminal 20 performs the repetition transmission by applying the determined inter-slot repetition or intra-slot repetition (and may perform PUCCH reception processing on the assumption).

### (User equipment)

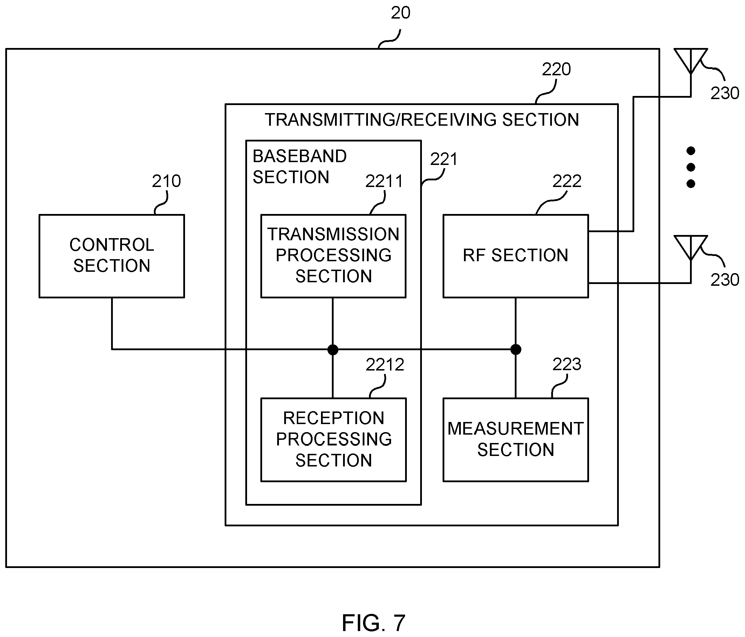

Fig. 7 is a diagram illustrating an example of a configuration of the user terminal according to one embodiment. The user terminal 20 includes a control section 210, a transmission/reception section 220, and a transmission/reception antenna 230. Note that one or more of the control sections 210, one or more of the transmitting/receiving sections 220, and one or more of the transmission/reception antennas 230 may be included.

Note that, although this example mainly describes functional blocks of a characteristic part of the present embodiment, it may be assumed that the user terminal 20 includes other functional blocks that are necessary for radio communication as well. A part of processing performed by each section described below may be omitted.

The control section 210 controls the entire user terminal 20. The control section 210 can include a controller, a control circuit, and the like that are described on the basis of common recognition in the technical field related to the present disclosure.

The control section 210 may control signal generation, mapping, and the like. The control section 210 may control transmission/reception, measurement, and the like, using the transmitting/receiving section 220 and the transmitting/receiving antenna 230. The control section 210 may generate data to be transmitted as a signal, control information, a sequence, and the like, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmission/reception circuit, and the like that are described on the basis of common recognition in the technical field related to the present disclosure.

The transmitting/receiving section 220 may be formed as an integrated transmission/reception section, or may include a transmission section and a reception section. The transmitting section may be constituted by the transmission processing section 2211 and the RF section 222. The reception section may be configured by the reception processing section 2212, the RF section 222, and the measurement section 223.

The transmission/reception antenna 230 can include an antenna that is described on the basis of common recognition in the technical field related to the present disclosure, for example, an array antenna or the like.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like, for example, on data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

Note that whether or not to apply DFT processing may be determined based on configuration of transform precoding. In a case where transform precoding is enabled for a certain channel (for example, PUSCH), the transmitting/receiving section 220 (transmission processing section 2211) may perform DFT processing as the transmission processing in order to transmit the channel using a DFT-s-OFDM waveform. In a case where it is not the case, DFT processing need not be performed as the transmission processing.

The transmitting/receiving section 220 (RF section 222) may perform modulation to a radio frequency range, filtering processing, amplification, and the like on the baseband signal, to transmit a signal in the radio frequency range via the transmission/reception antenna 230.

Meanwhile, the transmitting/receiving section 220 (RF section 222) may perform amplification, filtering processing, demodulation to a baseband signal, and the like on the signal in the radio frequency range received by the transmission/reception antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 220 (measurement section 223) may perform measurement on the received signal. For example, the measurement section 223 may perform RRM measurement, CSI measurement, and the like, on the basis of the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmission section and the reception section of the user terminal 20 in the present disclosure may include at least one of the transmitting/receiving section 220 or the transmission/reception antenna 230.

Note that the control section 210 may determine whether to apply the inter-slot repetition or the intra-slot repetition to physical uplink control channel (PUCCH) repetition transmission on the basis of the parameter related to a PUCCH (for example, the configuration (information) of the PUCCH format, the configuration (information) of the PUCCH resource, the information regarding the PUCCH repetition scheme, the parameter indicating the number of repetitions commonly used for the inter-slot repetition and the intra-slot repetition, the field related to the number of repetitions of nrofInterSlot-r17, nrofIntraSlot-r17, and DCI, and the like).

The transmitting/receiving section 220 may perform the repetition transmission by applying the determined inter-slot repetition or intra-slot repetition.

The control section 210 may determine to apply the intra-slot repetition to the repetition transmission in a case where the PUCCH format is a specific format (for example, PUCCH format 1/3/4).

The control section 210 may determine to apply the intra-slot repetition to the repetition transmission on the basis of the information regarding the PUCCH repetition scheme (for example, repetitionscheme-r17).

The control section 210 may determine to apply the intra-slot repetition to the repetition transmission on the basis of a value of the parameter (for example, nrofslots) indicating the number of repetitions commonly used for the inter-slot repetition and the intra-slot repetition.

### (Hardware Configuration)

Note that the block diagrams that have been used to describe the above embodiments illustrate blocks in functional units. These functional blocks (components) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (in a wired manner, a radio manner, or the like, for example) and using these apparatuses. The functional blocks may be implemented by combining software with the above-described single apparatus or the above-described plurality of apparatuses.

Here, the function includes, but is not limited to, determining, judging, calculating, computing, processing, deriving, investigating, searching, ascertaining, receiving, transmitting, outputting, accessing, solving, selecting, choosing, establishing, comparing, assuming, expecting, regarding, broadcasting, notifying, communicating, forwarding, configuring, reconfiguring, allocating, mapping, assigning, and the like. For example, a functional block (component) that has a transmission function may be referred to as a transmitting section (transmitting unit), a transmitter, and the like. In any case, as described above, the implementation method is not particularly limited.

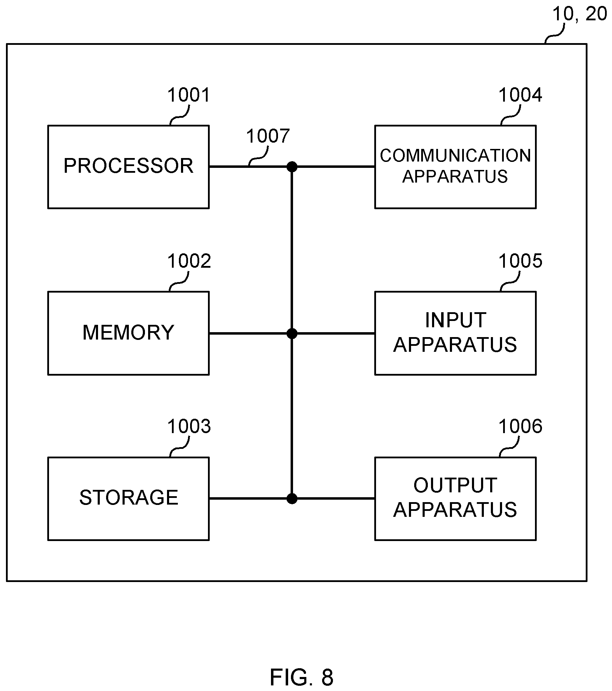

For example, the base station, the user equipment, and the like according to an embodiment of the present disclosure may function as a computer that executes processing of the radio communication method of the present disclosure. Fig. 8 is a diagram illustrating an example of a hardware configuration of the base station and the user terminal according to one embodiment. Physically, the above-described base station 10 and user equipment 20 may be constituted as a computer apparatus including a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, or a unit can be replaced with each other. The hardware configuration of the base station 10 and the user terminal 20 may include one or more of each of the apparatuses illustrated in the drawings, or does not have to include some apparatuses.

For example, although only one processor 1001 is illustrated, a plurality of processors may be provided. Further, the processing may be executed by one processor, or the processing may be executed by two or more processors simultaneously or sequentially, or using other methods. Note that the processor 1001 may be implemented by one or more chips.

Each of functions of the base station 10 and the user terminal 20 is, for example, implemented by causing predetermined software (program) to be read on hardware such as the processor 1001 or the memory 1002 to thereby cause the processor 1001 to perform operation, control communication via the communication apparatus 1004, and control at least one of reading or writing of data from or in the memory 1002 and the storage 1003.

The processor 1001 may control the entire computer by operating, for example, an operating system. The processor 1001 may be implemented by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

Furthermore, the processor 1001 reads programs (program code), software modules, data, and so on from at least one of the storage 1003 or the communication apparatus 1004 into the memory 1002, and executes various types of processing according to these. As the program, a program that causes a computer to execute at least a part of the operation described in the above-described embodiment is used. For example, the control section 110 (210) may be implemented by a control program that is stored in the memory 1002 and that operates on the processor 1001, and other functional blocks may be implemented likewise.

The memory 1002 is a computer-readable recording medium, and may include, for example, at least one of a read only memory (ROM), an erasable programmable ROM (EPROM), an electrically EPROM (EEPROM), a random access memory (RAM), or other appropriate storage media. The memory 1002 may be referred to as a register, a cache, a main memory (primary storage apparatus), and the like. The memory 1002 can store a program (program code), a software module, and the like, which are executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disc, a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as "secondary storage apparatus".

The communication apparatus 1004 is hardware (transmitting/receiving device) for performing inter-computer communication via at least one of a wired network or a wireless network, and for example, is referred to as "network device", "network controller", "network card", "communication module", and the like. The communication apparatus 1004 may include a high frequency switch, a duplexer, a filter, a frequency synthesizer, and the like in order to implement, for example, at least one of frequency division duplex (FDD) or time division duplex (TDD). For example, the transmitting/receiving section 120 (220), the transmitting/receiving antenna 130 (230), and the like described above may be implemented by the communication apparatus 1004. The transmitting/receiving section 120 (220) may be implemented in a physically or logically separated manner by the transmitting section 120a (220a) and the receiving section 120b (220b).

The input apparatus 1005 is an input device that receives input from the outside (for example, a keyboard, a mouse, a microphone, a switch, a button, a sensor, or the like). The output apparatus 1006 is an output device that performs output to the outside (for example, a display, a speaker, a light emitting diode (LED) lamp, or the like). Note that the input apparatus 1005 and the output apparatus 1006 may be integrated with each other (for example, a touch panel).

Further, these apparatuses such as the processor 1001 and the memory 1002 are connected to each other by the bus 1007 to communicate information. The bus 1007 may be configured by using a single bus, or may be configured by using a different bus for each apparatus.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented with at least one of these pieces of hardware.

### (Modification)

Note that terms described in the present disclosure and terms necessary for understanding the present disclosure may be replaced with terms that have the same or similar meanings. For example, a channel, a symbol, and a signal (signal or signaling) may be replaced with each other. Further, the signal may be a message. The reference signal can be abbreviated as an RS, and may be referred to as a pilot, a pilot signal, and the like, depending on which standard applies. Further, a component carrier (CC) may be referred to as a cell, a frequency carrier, a carrier frequency, and the like.

A radio frame may include one or more periods (frames) in the time domain. Each of the one or more periods (frames) included in the radio frame may be referred to as a subframe. Further, the subframe may include one or more slots in the time domain. The subframe may be a fixed time duration (for example, 1 ms) that is not dependent on numerology.

Here, the numerology may be a communication parameter used for at least one of transmission or reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, specific windowing processing performed by a transceiver in the time domain, and the like.

The slot may include one or more symbols in the time domain (orthogonal frequency division multiplexing (OFDM) symbols, single carrier frequency division multiple access (SC-FDMA) symbols, and the like). Also, the slot may be a time unit based on the numerology.

The slot may include a plurality of mini slots. Each mini slot may include one or more symbols in the time domain. Further, the mini slot may be referred to as a sub-slot. Each mini slot may include fewer symbols than the slot. A PDSCH (or PUSCH) transmitted in a time unit larger than the mini slot may be referred to as "PDSCH (PUSCH) mapping type A". A PDSCH (or PUSCH) transmitted using the mini slot may be referred to as "PDSCH (PUSCH) mapping type B".

The radio frame, the subframe, the slot, the mini slot, and the symbol all represent the time unit in signal communication. The radio frame, the subframe, the slot, the mini slot, and the symbol may be called by other applicable names, respectively. Note that time units such as the frame, the subframe, the slot, the mini slot, and the symbol in the present disclosure may be interchangeable.

For example, one subframe may be referred to as a TTI, a plurality of consecutive subframes may be referred to as a TTI, or one slot or one mini slot may be referred to as a TTI. That is, at least one of the subframe or the TTI may be a subframe (1 ms) in the existing LTE, may be a period shorter than 1 ms (for example, one to thirteen symbols), or may be a period longer than 1 ms. Note that the unit to represent the TTI may be referred to as a "slot," a "mini slot" and the like, instead of a "subframe".

Here, the TTI refers to the minimum time unit of scheduling in radio communication, for example. For example, in the LTE system, a base station performs scheduling to allocate radio resources (a frequency bandwidth, transmission power, and the like that can be used in each user terminal) to each user terminal in TTI units. Note that the definition of the TTI is not limited thereto.

The TTI may be the transmission time unit of channel-encoded data packets (transport blocks), code blocks, codewords, or the like, or may be the unit of processing in scheduling, link adaptation, or the like. Note that when the TTI is given, a time interval (for example, the number of symbols) in which the transport block, the code block, the codeword, or the like is actually mapped may be shorter than the TTI.

Note that, when one slot or one mini slot is referred to as a "TTI," one or more TTIs (that is, one or more slots or one or more mini slots) may be the minimum time unit of scheduling. Also, the number of slots (the number of mini slots) to constitute this minimum time unit of scheduling may be controlled.

A TTI having a time duration of 1 ms may also be referred to as a usual TTI (TTI in 3GPP Rel. 8 to 12), a normal TTI, a long TTI, a usual subframe, a normal subframe, a long subframe, a slot, or the like. A TTI shorter than the usual TTI may be referred to as a shortened TTI, a short TTI, a partial TTI (or fractional TTI), a shortened subframe, a short subframe, a mini slot, a sub-slot, a slot, or the like.

Note that the long TTI (for example, the usual TTI, subframe, or the like) may be replaced with a TTI having a time duration exceeding 1 ms, and the short TTI (for example, the shortened TTI or the like) may be replaced with a TTI having a TTI length less than the TTI length of the long TTI and not less than 1 ms.

A resource block (RB) is the unit of resource allocation in the time domain and the frequency domain, and may include one or more contiguous subcarriers in the frequency domain. The number of subcarriers included in the RB may be the same regardless of the numerology, and may be twelve, for example. The number of subcarriers included in the RB may be determined on the basis of the numerology.

Also, the RB may include one or more symbols in the time domain, and may be one slot, one mini slot, one subframe, or one TTI in length. One TTI, one subframe, and the like each may include one or more resource blocks.

Note that one or more RBs may be referred to as a physical resource block (PRB), a subcarrier group (SCG), a resource element group (REG), a PRB pair, an RB pair, and the like.

Furthermore, a resource block may include one or more resource elements (REs). For example, one RE may be a radio resource field of one subcarrier and one symbol.

A bandwidth part (BWP) (which may be referred to as a partial bandwidth or the like) may represent a subset of contiguous common resource blocks (RBs) for a certain numerology in a certain carrier. Here, the common RB may be specified by the index of the RB based on a common reference point of the carrier. The PRB may be defined in a certain BWP and be numbered within the BWP.

The BWP may include a BWP for UL (UL BWP) and a BWP for DL (DL BWP). For the UE, one or more BWPs may be configured within one carrier.

At least one of the configured BWPs may be active, and the UE does not have to assume to transmit or receive a predetermined channel/signal outside the active BWP. Note that "cell", "carrier", etc. in the present disclosure may be replaced with "BWP".

Note that structures of the radio frame, subframe, slot, mini slot, symbol, and the like described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

Furthermore, information, a parameter, or the like described in the present disclosure may be represented in absolute values, represented in relative values with respect to predetermined values, or represented by using other corresponding information. For example, a radio resource may be specified by a predetermined index.

Names used for the parameters and the like in the present disclosure are not restrictive names in any respect. Further, any mathematical expression or the like that uses these parameters may differ from those explicitly disclosed in the present disclosure. Since various channels (PUCCH, PDCCH, and the like) and information elements can be identified by any suitable names, various names assigned to these various channels and information elements are not restrictive names in any respect.

The information, signals, and the like described in the present disclosure may be represented by using a variety of different technologies. For example, data, instructions, commands, information, signals, bits, symbols, chips, and the like all of which may be referenced throughout the herein-contained description, may be represented by voltages, currents, electromagnetic waves, magnetic fields or particles, optical fields or photons, or any combination of these.

Further, information, signals, and the like can be output in at least one of a direction from higher layers to lower layers or a direction from lower layers to higher layers. Information, signals, and the like may be input and output via a plurality of network nodes.

The information, signals, and the like that are input and output may be stored in a specific location (for example, in a memory), or may be managed in a control table. The information, signals, and the like to be input and output can be overwritten, updated, or appended. The output information, signals, and the like, may be deleted. The information, signals, and the like that are input may be transmitted to other apparatuses.

Notification of information may be performed not only by using the aspects/embodiments described in the present disclosure but also using another method. For example, the notification of information in the present disclosure may be performed by using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), another signal, or a combination thereof.

Note that the physical layer signaling may be referred to as Layer 1/Layer 2 (L1/L2) control information (L1/L2 control signal), L1 control information (L1 control signal), and the like. Further, the RRC signaling may be referred to as an RRC message, and may be, for example, an RRC Connection Setup message, an RRC Connection Reconfiguration message, and so on. Further, notification of the MAC signaling may be performed using, for example, an MAC control element (CE).

Further, notification of predetermined information (for example, notification of "being X") is not limited to explicit notification but may be performed implicitly (for example, by not performing notification of the predetermined information or by performing notification of another piece of information).

Judging may be made in values represented by one bit (0 or 1), may be made in Boolean values that represent true or false, or may be made by comparing numerical values (for example, comparison with a predetermined value).

Regardless of whether or not being referred to as software, firmware, middleware, a microcode, a hardware description language, or other names, software should be widely interpreted so as to mean an instruction, an instruction set, a code, a code segment, a program code, a program, a subprogram, a software module, an application, a software application, a software package, a routine, a subroutine, an object, an executable file, an execution thread, a procedure, a function, and the like.

Further, the software, instruction, information, and the like may be transmitted and received via a transmission medium. For example, when software is transmitted from a website, a server, or another remote source by using at least one of a wired technology (coaxial cable, optical fiber cable, twisted pair, digital subscriber line (DSL), or the like) and a wireless technology (infrared rays, microwaves, and the like), at least one of the wired technology or the wireless technology is included within the definition of a transmission medium.

The terms "system" and "network" used in the present disclosure can be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmit power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small base station for indoors (remote radio head (RRH))). The term "cell" or "sector" refers to a part or the whole of a coverage area of at least one of a base station or a base station subsystem that performs a communication service in this coverage.

In the present disclosure, the terms such as mobile station (MS)", "user terminal", "user equipment (UE)", and "terminal" can be used interchangeably.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station or the mobile station may be referred to as a transmitting apparatus, a receiving apparatus, a radio communication apparatus, and the like. Note that at least one of the base station or the mobile station may be a device mounted on a moving object, a moving object itself, and the like. The moving object may be a transportation (for example, a car, an airplane, or the like), an unmanned moving object (for example, a drone, an autonomous car, or the like), or a (manned or unmanned) robot. Note that at least one of the base station or the mobile station also includes an apparatus that does not necessarily move during a communication operation. For example, at least one of the base station or the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. Further, terms such as "uplink" and "downlink" may be replaced with terms corresponding to communication between terminals (for example, "side"). For example, the uplink channel, the downlink channel, and the like may be replaced with a side channel.

Similarly, the user terminal in the present disclosure may be replaced with a base station. In this case, the base station 10 may be configured to have the above-described functions of the user terminal 20.

In the present disclosure, an operation performed by a base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station, or a combination thereof.

The aspects/embodiments illustrated in the present disclosure may be used individually or in combinations, which may be switched depending on the mode of implementation. Further, the order of processing procedures, sequences, flowcharts, and the like of the aspects/embodiments described in the present disclosure may be reordered as long as there is no inconsistency. For example, regarding the methods described in the present disclosure, elements of various steps are presented using an illustrative order, and are not limited to the presented specific order.

Each aspect/embodiment described in the present disclosure may be applied to a system using Long-Term Evolution (LTE), LTE-advanced (LTE-A), LTE-beyond (LTE-B), SUPER 3G, IMT-Advanced, 4th generation mobile communication system (4G), 5th generation mobile communication system (5G), 6th generation mobile communication system (6G), xth generation mobile communication system (xG) (xG(x is, for example, an integer or decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded on the basis of the foregoing, and the like. Further, a plurality of systems may be combined (for example, a combination of LTE or LTE-A and 5G, and the like) and applied.

The phrase "based on" as used in the present disclosure does not mean "based only on", unless otherwise specified. In other words, the phrase "based on" means both "based only on" and "based at least on".

Any reference to an element using designations such as "first" and "second" used in the present disclosure does not generally limit the amount or order of these elements. These designations can be used in the present disclosure, as a convenient way of distinguishing between two or more elements. In this way, reference to the first and second elements does not imply that only two elements may be employed, or that the first element must precede the second element in some way.

The term "determining" as used in the present disclosure may include a wide variety of operations. For example, "determining" may be regarded as judging, calculating, computing, processing, deriving, investigating, looking up, search, inquiry (for example, looking up in a table, database, or another data structure), ascertaining, and the like.

Furthermore, "determining" may be regarded as receiving (for example, receiving of information), transmitting (for example, transmitting of information), inputting, outputting, accessing (for example, accessing data in a memory), and the like.

Further, "determining" may be regarded as resolving, selecting, choosing, establishing, comparing, and the like. That is, "determining" may be regarded as a certain operation.

Furthermore, "determining" may be replaced with "assuming", "expecting", "considering", and the like.

As used in the present disclosure, the terms "connected" and "coupled", or any variation of these terms, mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced with "access".

In the present disclosure, when two elements are connected, these elements may be considered "connected" or "coupled" to each other by using one or more electrical wires, cables, printed electrical connections, and the like, and, as some non-limiting and non-inclusive examples, by using electromagnetic energy having wavelengths in a radio frequency domain, a microwave domain, and an optical (both visible and invisible) domain, or the like.

In the present disclosure, the phrase "A and B are different" may mean "A and B are different from each other". Note that the phrase may mean that "A and B are different from C". The terms such as "separated", "coupled", and the like may be interpreted as "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, for example, when translations add articles, such as a, an, and the in English, the present disclosure may include that the noun that follows these articles is in the plural.

Now, although the invention according to the present disclosure has been described in detail above, it should be obvious to a person skilled in the art that the invention according to the present disclosure is by no means limited to the embodiments described in the present disclosure. The invention according to the present disclosure can be embodied with various corrections and in various modified aspects, without departing from the scope of the invention defined on the basis of the description of claims. Consequently, the description of the present disclosure is provided only for the purpose of explaining examples, and should by no means be construed to limit the invention according to the present disclosure in any way.

## Claims

1. A terminal (20) comprising:
a control section (210) configured to determine, based on a value of a parameter that indicates a number of repetitions commonly used for inter-slot Physical Uplink Control Channel, PUCCH, repetition and intra-slot PUCCH repetition, to apply the intra-slot repetition to repetitive transmission of a PUCCH; and
a transmitting section (220) configured to perform the repetitive transmission by applying the intra-slot repetition.

2. The terminal (20) according to claim 1, comprising a receiving section (220) configured to receive the parameter by higher layer signaling.

3. The terminal (20) according to claim 1, wherein the transmitting section (220) is configured to transmit capability information indicating support of the intra-slot repetition.

4. A radio communication method for a terminal (20), comprising:
determining, based on a value of a parameter that indicates a number of repetitions commonly used for inter-slot Physical Uplink Control Channel, PUCCH, repetition and intra-slot PUCCH repetition, to apply the intra-slot repetition to repetitive transmission of a PUCCH; and
performing the repetitive transmission by applying the intra-slot repetition.

5. A base station (10) comprising:
a transmitting section (120) configured to transmit a parameter indicating a number of repetitions commonly used for inter-slot Physical Uplink Control Channel, PUCCH, repetition and intra-slot PUCCH repetition; and
a control section (110) configured to determine that a terminal performs repetitive transmission of a PUCCH, by applying the intra-slot repetition based on a value of the parameter.

6. A system comprising a terminal (20) according to any one of claims 1-3 and a base station (10) according to claim 5.

## Patentansprüche

1. Endgerät (20), umfassend:
einen Steuerabschnitt (210), der so konfiguriert ist, dass er basierend auf einem Wert eines Parameters, der eine Anzahl von Wiederholungen angibt, die üblicherweise für die Inter-Slot Physical Uplink Control Channel, PUCCH, - Wiederholung verwendet werden, die Intra-Slot PUCCH -Wiederholung bestimmt, die Intra-Slot-Wiederholung auf die wiederholte Übertragung eines PUCCH anzuwenden; und
einen Übertragungsabschnitt (220), der so konfiguriert ist, dass er die wiederholte Übertragung durch Anwendung der Intra-Slot-Wiederholung durchführt.

2. Endgerät (20) nach Anspruch 1, umfassend einen Empfangsabschnitt (220), der so konfiguriert ist, dass er den Parameter durch Signalisierung auf höherer Ebene empfängt.

3. Endgerät (20) nach Anspruch 1, wobei der Übertragungsabschnitt (220) so konfiguriert ist, dass er Kapazitätsinformationen sendet, die die Unterstützung der Intra-Slot-Wiederholung anzeigen.

4. Funkkommunikationsverfahren für ein Endgerät (20), umfassend:
Bestimmen, basierend auf einem Wert eines Parameters, der eine Anzahl von Wiederholungen anzeigt, die üblicherweise für die Inter-Slot Physical Uplink Control Channel, PUCCH, -Wiederholung verwendet werden, der Intra-Slot PUCCH-Wiederholung, um die Intra-Slot-Wiederholung auf die wiederholte Übertragung eines PUCCH anzuwenden; und
Durchführen der wiederholten Übertragung durch Anwenden der Intra-Slot-Wiederholung.

5. Basisstation (10), umfassend:
einen Übertragungsabschnitt (120), der so konfiguriert ist, dass er einen Parameter überträgt, der eine Anzahl von Wiederholungen angibt, die üblicherweise für die Inter-Slot Physical Uplink Control Channel, PUCCH, -Wiederholung und die Intra-Slot PUCCH -Wiederholung verwendet werden; und
einen Steuerabschnitt (110), der so konfiguriert ist, dass er bestimmt, dass ein Endgerät eine wiederholte Übertragung eines PUCCH durchführt, indem er die Intra-Slot-Wiederholung basierend auf einem Wert des Parameters anwendet.

6. System, das ein Endgerät (20) nach einem der Ansprüche 1 bis 3 und eine Basisstation (10) nach Anspruch 5 umfasst.

## Revendications

1. Terminal (20) comprenant :
une section de commande (210) configurée pour déterminer, sur la base
d'une valeur d'un paramètre qui indique un nombre de répétitions utilisées communément pour une répétition inter-créneau de canal de commande de liaison montante physique, PUCCH - Physical Uplink Control Channel, et une répétition intra-créneau PUCCH, pour appliquer la répétition intra-créneau à une transmission de répétition d'un PUCCH ; et
une section de transmission (220) configurée pour réaliser la transmission de répétition en appliquant la répétition intra-créneau.

2. Terminal (20) selon la revendication 1, comprenant une section de réception (220) configurée pour recevoir le paramètre par une signalisation de couche supérieure.

3. Terminal (20) selon la revendication 1, dans lequel la section de transmission (220) est configurée pour transmettre des informations de capacité indiquant un support de la répétition intra-créneau.

4. Procédé de communication radio pour terminal (20), comprenant :
déterminer, sur la base d'une valeur d'un paramètre qui indique un nombre de répétitions utilisées communément pour une répétition inter-créneau de canal de commande de liaison montante physique, PUCCH - Physical Uplink Control Channel, et
une répétition intra-créneau PUCCH, pour appliquer la répétition intra-créneau à une transmission de répétition d'un PUCCH ; et réaliser la transmission de répétition en appliquant la répétition intra-créneau.

5. Station de base (10) comprenant :
une section de transmission (120) configurée pour transmettre un paramètre indiquant un nombre de répétitions utilisées communément pour une répétition inter-créneau de canal de commande de liaison montante physique, PUCCH - Physical Uplink Control Channel, et une répétition intra-créneau PUCCH ; et
une section de commande (110) configurée pour déterminer qu'un terminal réalise une transmission de répétition d'un PUCCH, en appliquant la répétition intra-créneau sur la base d'une valeur du paramètre.

6. Système comprenant un terminal (20) selon l'une quelconque des revendications 1 à 3 et une station de base (10) selon la revendication 5.
